# EUROPÄISCHE PATENTANMELDUNG

(11) **EP 2 166 598 A2**
(43) Veröffentlichungstag der Anmeldung: **24.03.2010**
(21) Anmeldenummer: 09011567.6
(22) Anmeldetag: 09.09.2009
(51) Int. Cl.: H01M 2/16, H01M 4/38, H01M 4/48, H01M 10/0525, H01M 4/485, H01M 4/587, H01M 4/139, H01M 4/36

(54) **Elektrode und Separatormaterial für Lithium-Ionen-Zellen sowie Verfahren zu deren Herstellung**

(30) Priorität: 10.09.2008 DE 102008046498
(71) Anmelder: Li-Tec Battery GmbH, 01917 Kamenz (DE)
(72) Erfinder: Schäfer, Tim, 99762 Niedersachswerfen (DE); Gutsch, Andreas, Dr., 59348 Lüdinghausen (DE)
(74) Vertreter: Wallinger, Michael

(57) **Zusammenfassung**

Die Erfindung betrifft eine negative Elektrode für eine elektrochemische Vorrichtung, insbesondere eine Lithium-lonen-Batterie, mit einer Aktivschicht, die eine poröse äußere Oberfläche ausbildet, wobei zumindest die äußere Oberfläche der Aktivschicht zumindest bereichsweise mit Nanopartikeln beschichtet ist. Ferner werden bereitgestellt:
- eine negative Elektrode für eine elektrochemische Vorrichtung, mit einer Aktivschicht, die zumindest in Teilbereichen von einer porösen funktionellen Schicht bedeckt ist, wobei zumindest die äußere Oberfläche der porösen funktionellen Schicht zumindest bereichsweise mit Nanopartikeln beschichtet ist,
- ein Separatorkompositmaterial zur Separierung von Elektroden in einer elektrochemischen Vorrichtung, mit einer im Wesentlichen selbsttragende Trägerschicht und einer zumindest einseitig auf der Trägerschicht aufgebrachten porösen funktionellen Schicht, wobei eine äußere Oberfläche der Trägerschicht zumindest auf einer Seite zumindest in Teilbereichen mit Nanopartikeln beschichtet ist,
- eine negative Elektrode für eine elektrochemische Vorrichtung mit einer Aktivschicht, die zumindest in Teilbereichen mit einem erfindungsgemäßen Separatorkompositmaterial bedeckt ist,
- eine Paste zum Herstellen einer Aktivschicht einer negativen Elektrode, wobei die Paste aus einem Ausgangsmaterial, das im Wesentlichen mit Nanopartikeln beschichtete Aktivmassepartikel umfasst, gebildet ist.

## Beschreibung

Die vorliegende Erfindung bezieht sich auf eine Elektrode für eine elektrochemische Vorrichtung, wie insbesondere eine Lithium-lonen-Zelle, ein Separatorkompositmaterial zur Separierung von Elektroden in elektrochemischen Vorrichtungen, ein Ausgangsmaterial zum Ausbilden einer Aktivschicht einer negativen Elektrode, eine Paste zum Herstellen einer Aktivschicht sowie eine elektrochemische Vorrichtung, insbesondere eine Lithium-lonen-Zelle für einen Lithium-lonen-Batterie bzw. -Akkumulator.

Im Betrieb einer Zelle bildet sich auf der negativen Elektrode eine Schicht aus, der sogenannte SEI-Film (Englisch: Solid Electrolyt Interface, feste Elektrolyt-Grenzschicht). Dieser bildet sich auf jeder negativen Elektrode beim erstmaligen Unterschreiten des Potentials von etwa einem Volt gegen Lithium-Metall. Der SEI-Film ist ein wichtiger Faktor, der die Lebensdauer von Lithium-Zellen beeinflussen (begrenzen) kann.

Im Hinblick auf die bekannten Eigenschaften von Lithium-lonen-Zellen für Batterien bzw. Akkumulatoren besteht die Aufgabe der vorliegenden Erfindung darin, Lithium-lonen-Zellen thermisch stabiler und langlebiger zu gestalten.

Die Erfinder haben gefunden, dass diese Aufgabe gelöst werden kann, indem die negative Elektrode (Anode) durch eine mit Nanopartikeln beschichtete Schicht umgeben wird. Die Nanopartikel können direkt auf die äußere Oberfläche der Aktivschicht der negativen Elektrode aufgebracht werden, oder auf einer Trägerschicht eines Separatorkompositmaterials, die auf oder vor der Aktivschicht der negativen Elektrode angeordnet wird. Um eine direkt mit Nanopartikeln beschichtete Aktivschicht zu erhalten, kann die Aktivschicht einer nicht fertiggestellten negativen Elektrode mit Nanopartikeln beschichtet werden oder es können die Aktivmassepartikel, aus denen die Aktivschicht hergestellt ist, mit Nanopartikeln beschichtet werden und die Aktivschicht dann aus den mit Nanopartikeln beschichteten Aktivmassepartikeln ausgebildet werden, beispielsweise dadurch, dass die mit Nanopartikel beschichteten Aktivmassepartikel zu einer Paste verarbeitet werden, die dann auf einer Ableitvorrichtung der negativen Elektrode aufgetragen, getrocknet und gehärtet wird.

Zum Herstellen eines Separatorkompositmaterials mit Nanopartikel-Beschichtung kann eine selbsttragende Trägerschicht vor dem Aufbringen einer porösen Schicht einseitig oder beidseitig mit Nanopartikeln beschichtet werden.

Nach einem ersten Aspekt der vorliegenden Erfindung wird, wie beansprucht, zur Lösung der Aufgabe eine negative Elektrode für eine elektrochemische Vorrichtung, insbesondere eine Lithium-lonen-Batterie, mit einer, eine poröse äußere Oberfläche ausbildenden Aktivschicht bereitgestellt. Erfindungsgemäß ist zumindest die äußere Oberfläche der Aktivschicht bereichsweise mit Nanopartikeln beschichtet. Eine bevorzugte Ausführungsform der vorliegenden Erfindung sieht daher vor, dass die poröse funktionelle Schicht im Wesentlichen aus Beschichtungspartikeln besteht, und dass die äußere Oberfläche der porösen funktionellen Schicht im Wesentlichen durch die zur Außenseite der porösen funktionellen Schicht hin exponierten Oberflächen der Beschichtungspartikel gebildet ist. Eine weitere bevorzugte Ausführungsform der vorliegenden Erfindung sieht vor, dass zumindest die Beschichtungspartikel der obersten Partikelschicht der porösen funktionellen Schicht im Wesentlichen allseitig mit Nanopartikeln beschichtet sind. Eine besonders bevorzugte Ausführungsform der vorliegenden Erfindung sieht ferner vor, dass die die poröse funktionelle Schicht bildenden Beschichtungspartikel im Wesentlichen allseitig mit Nanopartikeln beschichtet sind.

Nach einem zweiten Aspekt der vorliegenden Erfindung wird eine negative Elektrode für eine elektrochemische Vorrichtung, insbesondere einer Lithium-lonen-Batterie bereitgestellt. Die negative Elektrode weist eine äußere Aktivschicht auf, die zumindest in Teilbereichen von einer porösen funktionellen Schicht bedeckt ist. Erfindungsgemäß ist zumindest die äußere Oberfläche der porösen Schicht zumindest bereichsweise mit Nanopartikeln beschichtet.

Dabei ist die poröse, funktionelle Schicht insbesondere zur Aufnahme eines Elektrolyts, zur Ionenleitung und als Elektronensperre geeignet.

Nach einem dritten Aspekt der vorliegenden Erfindung wird ein Separatorkompositmaterial zur Separierung von Elektroden in elektrochemischen Vorrichtungen, insbesondere Lithium-Ionen-Batterien, bereitgestellt. Das Separatorkompositmaterial weist eine im Wesentlichen selbsttragende Trägerschicht und eine zumindest einseitig auf der Trägerschicht aufgebrachte poröse funktionelle Schicht auf, wobei die posröse funktionelle Schicht insbesondere zur Aufnahme eines Elektrolyts, zur Ionenleitung und als Elektrodensperre geeignet ist. Erfindungsgemäß ist eine äußere Oberfläche der Trägerschicht zumindest auf einer Seite zumindest in Teilbereichen mit Nanopartikeln beschichtet. Eine bevorzugte Ausführungsform der vorliegenden Erfindung sieht daher vor, dass die Trägerschicht auf der Seite, auf der die poröse funktionelle Schicht aufgebracht ist, zumindest in Teilbereichen mit Nanopartikeln beschichtet ist. Eine besonderes bevorzugte Ausführungsform der vorliegenden Erfindung sieht ferner vor, dass die Trägerschicht auf der der Seite, auf der die poröse funktionelle Schicht aufgebracht ist, gegenüberliegenden Seite zumindest in Teilbereichen mit Nanopartikeln beschichtet ist.

Immer noch nach dem dritten Aspekt wird eine negative Elektrode für eine elektrochemische Vorrichtung, insbesondere eine Lithium-lonen-Batterie. Bereitgestellt. Die negative Elektrode weist eine Aktivschicht auf. Erfindungsgemäß ist die Aktivschicht zumindest in Teilbereichen mit einem Separatorkompositmaterial nach dem dritten Aspekt der Erfindung bedeckt.

Nach einem vierten Aspekt der vorliegenden Erfindung wird ein Ausgangsmaterial zum Ausbilden einer Aktivschicht einer negativen Elektrode für eine elektrochemische Vorrichtung, insbesondere eine Lithium-lonen-Batterie, bereitgestellt, wobei das Ausgangsmaterial im Wesentlichen Aktivmassepartikel umfasst. Erfindungsgemäß werden die Aktivmassepartikel mit Nanopartikeln beschichtet, und zwar bevor die Aktivmassepartikel zum Ausbilden der Aktivschicht oder einer Paste zur Ausbildung der Aktivschicht weiterverarbeitet werden.

Immer noch nach dem vierten Aspekt wird eine Paste zum Herstellen einer Aktivschicht einer negativen Elektrode für eine elektrochemische Vorrichtung, insbesondere eine Lithium-Ionen-Batterie, bereitgestellt, Dabei wird die Paste aus einem Ausgangsmaterial, das im Wesentlichen Aktivmassepartikel umfasst, gebildet ist. Erfindungsgemäß sind die Aktivmassepartikel mit Nanopartikeln beschichtet, und zwar bevor das Ausgangsmaterial zur Paste weiter verarbeitet wird.

Immer noch nach dem vierten Aspekt wird eine negative Elektrode für eine elektrochemische Vorrichtung, insbesondere eine Lithium-lonen-Batterie bereitgestellt, wobei die negative Elektrode einer Aktivschicht aufweist. Erfindungsgemäß ist die Aktivschicht aus einer Paste gemäß dem vierten Aspekt der Erfindung wie oben beschrieben hergestellt, so dass zumindest die äußere Oberfläche der Aktivschicht zumindest bereichsweise mit Nanopartikeln beschichtet ist.

Eine bevorzugte Ausführungsform der vorliegenden Erfindung sieht eine Aktivschicht aus einer Paste vor, deren Aktivmassepartikel aus einem Material bestehen, welches ausgewählt ist aus der Gruppe, die aus Graphit, Hard Carbon, nanokristallinem amorphem Silizium oder Lithium-Tantalat besteht.

Eine weitere bevorzugte Ausführungsform der vorliegenden Erfindung sieht eine negative Elektrode für eine elektrochemische Vorrichtung, insbesondere eine Lithium-lonen-Batterie, mit einer äußeren Aktivschicht, vor, wobei die Aktivschicht aus einer Paste nach einem der beschriebenen Ausführungsbeispiele hergestellt ist, so dass zumindest die äußere Oberfläche der Aktivschicht zumindest bereichsweise mit Nanopartikeln beschichtet ist.

Eine weitere bevorzugte Ausführungsform der vorliegenden Erfindung sieht eine negative Elektrode für eine elektrochemische Vorrichtung, insbesondere eine Lithium-lonen-Batterie, mit einer äußeren Aktivschicht, vor, wobei die Aktivschicht zumindest in Teilbereichen mit einer porösen funktionellen Schicht, die im Betrieb der negativen Elektrode insbesondere in einer elektrochemischen Vorrichtung zur Aufnahme des Elektrolyts, zur Ionenleitung und als Elektrodensperre geeignet ist, beschichtet ist.

In weiteren Aspekten der vorliegenden Erfindung wird noch folgendes bereitgestellt: eine elektrochemische Vorrichtung, insbesondere eine Lithium-lonen-Batterie, die erfindungsgemäß eine negative Elektrode gemäß einer der oben beschriebenen Aspekte umfasst und eine elektrochemische Vorrichtung, die ein Separatorkompositmaterial nach dem oben beschriebenen Aspekt der Erfindung umfasst.

Bei den erfindungsgemäß bereitgestellten negativen Elektroden wird als besonderer Vorteil im Betrieb der elektrochemischen Vorrichtungen, insbesondere Lithium-lonen-Zellen, gefunden, dass die Zellen thermisch stabiler und eine gute Benetzbarkeit der dem Elektrolyten ausgesetzten Oberfläche aufweisen.

Im Hinblick auf die im Stand der Technik bekannten Probleme mit dem SEI-Film wird ferner gefunden, dass die erfindungsgemäßen ausgestalteten negativen Elektroden nach dem ersten, zweiten und vierten Aspekt keinen bzw. keinen nachweisbaren SEI-Film ausbilden, und dass man bei den nach dem dritten Aspekt der Erfindung hergestellten negativen Elektroden im Betrieb den SEI-Film anforderungsgerecht erhalten bzw. aufrecht erhalten kann. Mit solchen erfindungsgemäß durch Aufbringen einer Nanopartikelschicht hergestellten negativen Elektroden können problemlos mehrere tausend Zyklen ohne größere Alterungsverluste erreicht werden.

Unter der genannten negativen Elektrode einer Lithium-lonen-Batterie ist die Elektrode zu verstehen, an der sich beim Ladevorgang die positiv geladenen Lithium-lonen, die durch den Elektrolyten hindurch von der Gegenelektrode (der positiven Elektrode bzw. Kathode) geliefert werden, ansammeln, und von der die Lithium-lonen beim Entladen zurück in die Gegenelektrode wandern.

Unter der genannten Lithium-lonen-Batterie ist ein Lithium-lonen-Akkumulator, eine Lithium-lonen-Sekundärbatterie, eine Lithium-lonen-Batterie bzw. eine Lithium-lonen-Zelle, aus der Serien- bzw. Reihenschaltung einzelner Lithium-lonen-Zellen Batterien oder Akkumulatoreinrichtungen gebildet werden, zu verstehen. Das bedeutet, dass der Begriff Lithium-lonen-Batterie hierin als Sammelbegriff für die im Stand der Technik gebräuchlichen, vorgenannten Begriffe verwendet wird.

Unter der genannten Aktivschicht der negativen Elektrode ist die Schicht zu verstehen, in der die elektrochemischen Vorgänge der Anlagerung von Lithium-lonen beim Laden bzw. der Wiederabgabe von Lithium-Ionen an den Elektrolyten beim Entladen vorgehen. Dabei kann die Aktivschicht beispielsweise aus Graphit, sogenanntem "Hard Carbon" (eine amorphe Kohlenstoffmodifikation) oder aus nanokristallinem, amorphen Silizium bestehen, wobei die Lithium-lonen sich in den vorgenannten Materialien durch sogenannte Interkalation beim Laden ansammeln. Eine bevorzugte Ausführungsform der vorliegenden Erfindung sieht daher ein Ausgangsmaterial zum Ausbilden einer Aktivschicht einer negativen Elektrode vor, bei dem die Aktivmassepartikel aus einem Material bestehen, welches ausgewählt ist aus der Gruppe, die aus Graphit, Hard Carbon, nanokristallinem amorphem Silizium oder Lithium-Tantalat besteht,
Wenn die negative Elektrode aus Graphit besteht, bewegen sich Lithium-lonen beim Laden zwischen die Graphitebenen (nC) der negativen Elektrode und bilden mit dem Kohlenstoff eine Interkalationsverbindung (LinₓnC). Die Aktivschicht kann auch aus Lithium-Titanat (L1₄Ti₅O₁₂) bestehen. Weitere Materialien zum Ausbilden der Aktivschicht umfassen beispielsweise: metallisches Lithium; Legierungen auf Zinnbasis; Metallnitride oder Phosphide, die in der Lage sind, Lithium einzulagern, wie beispielsweise CoN₃, NiN₃, CuN₃, oder FeP₂; Nitride LiₓM_{y}N₂, wobei M beispielsweise Mo, Mn oder Fe ist und vorzugsweise x = 0,01 bis 1, mehr bevorzugt 0,2 bis 0,9, und y = 1-x ist; Nitride Li₃₋ₓMₓN, wobei M ein Übergangsmetall ist und vorzugsweise x = 0,1 bis 0,9, mehr bevorzugt 0,2 bis 0,8; und/oder Phosphide LiₓM_{y}P_{z}, wobei M ein Metall wie beispielsweise Cu, Mn oder Fe ist und vorzugsweise x = 0,01 bis 1, mehr bevorzugt 0,2 bis 0,9 ist, y = 1-x ist; und z eine ganze Zahl ist, die so groß gewählt ist, dass die Verbindung keine elektrische Ladung aufweist. Die Aktivschicht kann auch aus einer beliebigen Mischung der vorgenannten Materialien bestehen.

Unter den genannten Aktivmassepartikel sind die, beispielsweise kristallinen, Partikel des die Aktivschicht ausbildenden Materials, zwischen denen die Lithium-lonen sich beim Laden ansammeln, zu verstehen. Für Graphit als negatives Elektrodenmaterial kann ein Aktivmassepartikel auch eine Graphitebene sein. In einer für den Einsatz fertiggestellten Elektroden für eine Lithium-lonen-Zelle können die Aktivmassepartikel auch mittels eines Bindemittels zum Ausbilden der Aktivschicht miteinander verbunden bzw. aneinander haftend sein.

Unter der genannten porösen funktionellen Schicht ist eine Schicht zu verstehen, wie sie im Stand der Technik in Separatorkompositmaterialien, wie beispielsweise Separion^{®}, als eine auf einer selbsttragenden Trägerschicht aufgebrachte, funktionelle Schicht bereitgestellt wird. Die poröse funktionelle Schicht erfüllt insbesondere die Aufgaben, eine Teilmange des Elektrolyten aufzunehmen, [Lithium]-lonen zu leiten und als Elektrodensperre zu dienen. Diese poröse bzw. funktionelle Schicht, die insbesondere zur Aufnahme eines Elektrolyts zur Ionenleitung und als Elektrodensperre geeignet ist, kann, auf einem Trägermaterial zum Ausbilden eines Separatorkompositmaterials bereitgestellt werden, so dass das Separatorkompositmaterial als gesondertes Produkt verkauft werden kann und damit anderweitig bereitgestellte negative Elektroden umgeben werden können. Alternativ kann die poröse funktionelle Schicht auch direkt auf der Aktivschicht einer negativen Elektrode aufgebracht werden.

Unter Separatorkompositmaterial ist ein Material zur Separierung bzw. Trennung der Elektroden in einer elektrochemischen Vorrichtung, insbesondere einer Lithium-lonen-Batterie zu verstehen, wie es beispielsweise unter dem Namen Separion^{®} bekannt ist, oder wie es beispielsweise in der WO 2004/021499 oder der WO 2004/021477 beschrieben ist.

Unter Nanopartikeln sind Partikel zu verstehen, deren Durchmesser nicht mehr als ca. 100 Nanometer beträgt. Nanopartikel können aus Aluminiumoxid (Al₂O₃), Zirkonoxid (Zro₂) oder Siliziumoxid (SiO₂) oder aus einer Mischung von diesen hergestellt sein. Jedenfalls ist der Durchmesser der Nanopartikel ungefähr mindestens eine Größenordnung kleiner als der Durchmesser der Partikel, die die insbesondere zur Aufnahme des Elektrolyts, zur lonenleitung und als Elektrodensperre geeignete poröse Schicht oder die die Aktivschicht ausbilden.

Nach den vorgenannten Aspekten der Erfindung können die Nanopartikel aus einem Material bestehen, das aus einer Gruppe, die Aluminiumoxid, Zirkonoxid, Siliziumoxid oder eine Mischung davon umfasst, ausgewählt sein. Diese Materialien sind relativ preiswert und in hoher Reinheit zu beziehen und sind für die technische Anwendung besonders geeignet. Eine bevorzugte Ausführungsform der vorliegenden Erfindung sieht daher ein Ausgangsmaterial zum Ausbilden einer Aktivschicht einer negativen Elektrode für eine elektrochemische Vorrichtung, insbesondere eine Lithium-lonen-Batterie, vor, bei dem die Nanopartikel aus einem Material bestehen, das aus einer Gruppe, die Aluminuimoxid, Zirkonoxid, Siliziumoxid oder eine Mischung davon umfasst, ausgewählt ist.

Nach den vorgenannten Aspekten kann die Aktivschicht im Wesentlichen aus aneinander haftenden Aktivmassepartikeln bestehen und die äußere Oberfläche der Aktivschicht ist im Wesentlichen durch die zur Außenseite der Aktivschicht hin exponierten Oberflächen der Aktivmassepartikel gebildet. Unter der "zur Außenseite der Aktivschicht hin exponierten Oberfläche" ist die für das Ansammeln der Lithium-lonen zugängliche Oberfläche der die Aktivschicht ausbildenden Aktivmassepartikel zu verstehen. Eine bevorzugte Ausführungsform der vorliegenden Erfindung sieht daher vor, dass die Aktivschicht im Wesentlichen aus aneinander haftenden Aktivmassepartikeln besteht und dass die äußere Oberfläche der Aktivschicht im Wesentlichen durch die zur Außenseite der Aktivschicht hin exponierten Oberflächen der Aktivmassepartikel gebildet ist.

In einer Ausführungsform einer negativen Elektrode nach dem ersten oder vierten Aspekt der Erfindung ist zumindest die oberste Partikelschicht der die Aktivschicht bildenden Aktivmassepartikel im Wesentlichen allseitig mit Nanopartikeln beschichtet. Dies kann dadurch erreicht werden, dass die die oberste Partikelschicht bildenden Aktivmassepartikel mit Nanopartikeln beschichtet worden sind, bevor die Aktivschicht aus den Aktivmassepartikeln gebildet wird. Insbesondere können die die Aktivschicht bildenden Aktivmassepartikel im Wesentlichen allseitig mit Nanopartikeln beschichtet sein. Damit kann die Beschichtung mit Nanopartikeln vor dem Herstellen der negativen Elektrode ausgeführt werden, was in der Praxis einfacher bzw. auch preiswerter sein kann als das Beschichten der äußeren Oberfläche der Aktivschicht mit Nanopartikeln auf bereitgestellten negativen Elektroden. Eine bevorzugte Ausführungsform der vorliegenden Erfindung sieht daher vor, dass zumindest die die oberste Partikelschicht der die Aktivschicht bildenden Aktivmassepartikel im Wesentlichen allseitig mit Nanopartikeln beschichtet sind. Eine weitere bevorzugte Ausführungsform der vorliegenden Erfindung sieht vor, dass die die Aktivschicht bildenden Aktivmassepartikel im Wesentlichen allseitig mit Nanopartikeln beschichtet sind.

In vorteilhafter Weise ist die Aktivschicht zumindest in Teilbereichen oder auch vollständig von einer porösen Schicht, die zur Aufnahme des Elektrolyts, zur Ionenleitung und als Elektrodensperre geeignet ist, bedeckt. Vorzugsweise ist diese Schicht eine keramische Schicht, insbesondere eine keramische Membran, die insbesondere aus Aluminiumoxid (Al₂O₃) und bzw. oder Siliziumoxid (SiO₂) bestehen kann. Insbesondere kann die poröse Schicht, die zur Aufnahme des Elektrolyts, zur Ionenleitung und als Elektrodensperre geeignet ist, die funktionelle Schicht von Separatorkompositmaterialien sein. Eine bevorzugte Ausführungsform der vorliegenden Erfindung sieht daher vor, dass die Aktivschicht zumindest in Teilbereichen von einer porösen funktionellen Schicht, die im Betrieb der negativen Elektrode insbesondere zur Aufnahme des Elektrolyts, zur Ionenleitung und als Elektrodensperre geeignet ist, bedeckt ist.

Nach dem zweiten Aspekt der vorliegenden Erfindung, wobei die Aktivschicht zumindest in Teilbereichen von einer porösen, funktionellen, insbesondere zur Aufnahme eines Elektrolyts, zur Ionenleitung und als Elektronensperre geeigneten Schicht bedeckt ist, und zumindest die äußere Oberfläche der porösen funktionellen Schicht zumindest bereichsweise mit Nanopartikeln beschichtet ist, kann die poröse funktionelle Schicht im Wesentlichen aus Beschichtungsartikeln bestehen und ist die äußere Oberfläche der porösen funktionellen Schicht im Wesentlichen durch die zur Außenseite der porösen Schicht hin exponierten Oberflächen der Beschichtungspartikel gebildet. Eine bevorzugte Ausführungsform der vorliegenden Erfindung sieht daher eine negative Elektrode für eine elektrochemische Vorrichtung, insbesondere für eine Lithium-lonen-Batterie, vor mit einer Aktivschicht, die zumindest in Teilbereichen von einer porösen funktionellen Schicht, die im Betrieb der elektrochemischen Vorrichtung insbesondere zur Aufnahme eines Elektrolyts, zur Ionenleitung und als Elektrodensperre geeignet ist, bedeckt ist, wobei zumindest die äußere Oberfläche der porösen funktionellen Schicht zumindest bereichsweise mit Nanopartikeln beschichtet ist.

Hierin sind unter Beschichtungspartikeln die partikelförmigen Bestandteile der porösen funktionellen Schicht zu verstehen. Unter der "zur Außenseite der porösen Schicht hin exponierten Oberfläche der Beschichtungspartikel" ist die Oberfläche der Beschichtungspartikel zu verstehen, die im Betrieb der Lithium-lonen-Zelle durch den Elektrolyten benetzt wird.

Zumindest die Beschichtungspartikel, die die oberste Partikelschicht der porösen funktionellen Schicht ausbilden, können im Wesentlichen allseitig mit Nanopartikeln beschichtet sein. Auch können im Wesentlichen alle die poröse funktionellen Schicht bildenden Beschichtungspartikel im Wesentlichen allseitig mit Nanopartikeln beschichtet sein.

Nach dem dritten Aspekt der Erfindung, nach dem ein Separatorkompositmaterial bereitgestellt wird, bei dem erfindungsgemäß eine äußere Oberfläche der Trägerschicht zumindest auf einer Seite zumindest in Teilbereichen mit Nanopartikeln beschichtet ist, kann die äußere Oberfläche der Trägerschicht auch beidseitig zumindest in Teilbereichen mit Nanopartikeln beschichtet sein. Für ein derartiges Separatorkompositmaterial, das als eigenständiges Produkt hergestellt und verkauft werden kann, ist es gleichwertig, mit welcher Seite es auf einer negativen Elektrode befestigt wird bzw. welche Seite in einer fertig gestellten Lithium-lonen-Zelle zum Elektrolyten hin exponiert ist

In einer Ausführungsform des Separatorkompositmaterials kann die Seite der Trägerschicht, auf der die poröse funktionelle Schicht aufgebracht ist, zumindest in Teilbereichen mit Nanopartikeln beschichtet sein, und zwar insbesondere bevor die poröse Schicht aufgebracht wird. So braucht die gegenüberliegende Seite der Trägerschicht nicht weiter beschichtet zu werden und dient zum Aufbringen bzw. Befestigen auf der negativen Elektrode.

Alternativ kann die Trägerschicht auf der Seite, die der Seite, auf der die poröse funktionellen Schicht aufgebracht ist, gegenüberliegt, zumindest in Teilbereichen mit Nanopartikeln beschichtet sein. So kann in einer fertiggestellten Lithium-lonen-Zelle, in der das Separatorkompositmaterial auf der negativen Elektrode aufgebracht ist, die auf der zum Elektrolyten hin exponierten Seite aufgebrachte, poröse, funktionelle Schicht ihre den Elektrolyten aufnehmende, Ionen leitende und als Elektrodensperre dienende Funktion entfalten und die auf der gegenüberliegenden, der negativen Elektrode zugewandten Seite angeordneten Nanopartikel ihre die Ausbildung der SEI-Schicht beeinflussende, erfindungsgemäße Wirkung entfalten.

Die Trägerschicht kann im Wesentlichen aus Trägerfasern bestehen und die äußere Oberfläche der Trägerschicht ist dann im Wesentlichen durch die zur Außenseite der Trägerschicht hin exponierte Oberfläche der Trägerfasern gebildet. Die Ausbildung der Trägerschicht aus Trägerfasern bewirkt, dass die Trägerschicht selbsttragend wird. Eine bevorzugte Ausführungsform der vorliegenden Erfindung sieht daher vor, dass die Trägerschicht im Wesentlichen aus Trägerfasern besteht, und dass die äußere Oberfläche der Trägerschicht im Wesentlichen durch die zur Außenseite der Trägerschicht hin exponierten Oberflächen der Trägerfasern gebildet ist.

Zumindest die oberste Faserschicht der die Trägerschicht bildenden Trägerfasern kann im Wesentlichen allseitig mit Nanopartikeln beschichtet sein. Diese Ausführungsform ist vorteilhaft, wenn eine mit Nanopartikeln beschichtete Faserschicht auf einem Substrat von nicht mit Nanopartikeln behandelten Faserschichten zur Ausbildung der Trägerschicht aufgebracht wird.

Auch können die die Trägerschicht bildenden Trägerfasern im Wesentlichen allseitig mit Nanopartikeln beschichtet sein. Diese Ausführungsform ist vorteilhaft, wenn die Beschichtung der Fasern mit Nanopartikeln, insbesondere beispielsweise aus Haftungsgründen, vor dem Verarbeiten der Trägerfasern zur Trägerschicht ausgeführt wird. Eine weitere bevorzugte Ausführungsform der vorliegenden Erfindung sieht ferner vor, dass zumindest die die oberste Faserschicht der die Trägerschicht bildenden Trägerfasern im Wesentlichen allseitig mit Nanopartikeln beschichtet sind. Eine weitere bevorzugte Ausführungsform der vorliegenden Erfindung sieht ferner vor, dass die die Trägerschicht bildenden Trägerfasern im Wesentlichen allseitig mit Nanopartikeln beschichtet sind.

Die Trägerschicht kann aus gewebten oder aus nicht gewebten Trägerfasern bestehen. Dadurch sind in der Anwendung sowohl Gewebe als auch Vliese möglich. Eine weitere bevorzugte Ausführungsform der vorliegenden Erfindung sieht daher vor, dass die Trägerschicht aus gewebten oder nicht gewebten Trägerfasern besteht.

Die Trägerfasern können Polymerfasern oder zum Ausbilden eines Gewebes geeignete Stahldrähte, insbesondere Edelstahldrähte, sein. Polymerfasern und Stahldrähte sind leicht verfügbare und preiswerte Ausgangsmaterialien zum Ausbilden der Trägerschicht für das Separatorkompositmaterial. Vorzugsweise ist die Trägerschicht ein Edelstahlgewebe oder ein Polymervlies. Dies sind besonders preiswert und vielfältig verfügbare Rohstoffmaterialien für die Trägerschicht. Eine weitere bevorzugte Ausführungsform der vorliegenden Erfindung sieht ferner vor, dass die Trägerfasern Polymerfasern oder zum Ausbilden eines Gewebes geeignete Stahldrähte, insbesondere Edelstahldrähte, sind. Eine weitere bevorzugte Ausführungsform der vorliegenden Erfindung sieht ferner vor, dass die Trägerschicht ein Edelstahlgewebe oder ein Polymervlies ist.

Eine weitere bevorzugte Ausführungsform der vorliegenden Erfindung sieht eine negative Elektrode für eine elektrochemische Vorrichtung, insbesondere eine Lithium-lonen-Batterie, mit einer Aktivschicht vor, die zumindest in Teilbereichen mit einem Separatorkompositmaterial nach einem der vorgenannten Ausführungsbeispiele der Erfindung bedeckt ist.

Nach dem ersten Aspekt der Erfindung wird noch ein Verfahren zum Herstellen einer negativen Elektrode für eine elektrochemische Vorrichtung, insbesondere eine Lithium-lonen-Batterie, bereitgestellt. Das Verfahren umfasst das Bereitstellen einer negativen Elektrode mit einer Aktivschicht. Erfindungsgemäß wird eine äußere Oberfläche der Aktivschicht zumindest bereichsweise mit Nanopartikeln beschichtet.

In dem Verfahren nach dem ersten Aspekt kann das Beschichten der Aktivschicht mit Nanopartikeln aus einer Suspension oder als Pulver unter Einwirkung eines elektrostatischen Feldes ausgeführt werden. Eine bevorzugte Ausführungsform der vorliegenden Erfindung sieht daher vor, dass das Beschichten mit Nanopartikeln aus einer Suspension oder als Pulver unter Einwirkung eines elektrostatischen Feldes ausgeführt wird.

Nach dem zweiten Aspekt der Erfindung wird noch ein Verfahren zum Herstellen einer negativen Elektrode für eine elektrochemische Vorrichtung, insbesondere eine Lithium-lonen-Batterie bereitgestellt. Das Verfahren umfasst das Bereitstellen einer negativen Elektrode mit einer Aktivschicht. Erfindungsgemäß wird eine äußere Oberfläche der Aktivschicht zumindest bereichsweise mit einer porösen funktionellen Schicht, die im Betrieb der elektrochemischen Vorrichtung insbesondere zur Aufnahme eines Elektrolyts, zur Ionenleitung und als Elektrodensperre geeignet ist, beschichtet und eine äußere Oberfläche der porösen funktionellen Schicht wird zumindest bereichsweise mit Nanopartikeln beschichtet.

In dem Verfahren nach dem zweiten Aspekt kann das Beschichten der porösen funktionellen Schicht mit Nanopartikeln aus einer Suspension oder als Pulver unter Einwirkung eines elektrostatischen Feldes ausgeführt werden.

Eine bevorzugte Ausführungsform der vorliegenden Erfindung sieht ein Verfahren zum Herstellen einer negativen Elektrode für eine elektrochemische Vorrichtung vor, umfassend die folgenden Schritte:
- Beschichten von Aktivmassepartikeln zur Ausbildung einer Aktivschicht der elektrochemischen Vorrichtung mit Nanopartikeln,
- Weiterverarbeiten der mit Nanopartikeln beschichteten Aktivmassepartikel zu einer Paste,
- Aufbringen der Paste umfassend mit Nanopartikeln beschichtete Aktivmassepartikel auf ein selbsttragendes Substrat,
- Trocknen und Aushärten der Paste zum Ausbilden einer Aktivschicht.

Ein besonders bevorzugtes Verfahren ist **dadurch gekennzeichnet, dass** das Substrat nach Material und Abmessung so ausgewählt ist, dass es im Betrieb der elektrochemischen Vorrichtung als Stromableiter der negativen Elektrode dient.

Bevorzugt sind ferner Verfahren zum Herstellen einer negativen Elektrode für eine elektrochemische Vorrichtung, bei denen die Nanopartikel aus einem Material bestehen, das aus einer Gruppe, die Aluminuimoxid, Zirkonoxid, Siliziumoxid oder eine Mischung davon umfasst, ausgewählt ist.

Nach dem dritten Aspekt der Erfindung wird ein Verfahren zum Herstellen eines Separatorkompositmaterials für den Einsatz in einer elektrochemischen Vorrichtung, insbesondere einer Lithium-lonen-Batterie, bereitgestellt. Das Verfahren umfasst das erfindungsgemäße Beschichten einer im Wesentlichen selbst tragenden Trägerschicht zumindest bereichsweise mit Nanopartikeln und das Aufbringen einer porösen funktionellen Schicht, die im Betrieb der elektrochemischen Vorrichtung insbesondere zur Aufnahme eines Elektrolyts, zur lonenleitung und als Elektronensperre geeignet ist, zumindest bereichsweise auf die mit zumindest bereichsweise mit Nanopartikeln beschichtete Trägerschicht.

Nach dem vierten Aspekt der Erfindung wird ein Verfahren zum Herstellen einer negativen Elektrode für eine elektrochemische Vorrichtung, insbesondere eine Lithium-lonen-Batterie, bereitgestellt. Das Verfahren umfasst das erfindungsgemäße Beschichten von Aktivmassepartikeln zur Ausbildung einer Aktivschicht der elektrochemischen Vorrichtung mit Nanopartikel, das Weiterverarbeiten der mit Nanopartikeln beschichteten Aktivmassepartikel zu einer Paste, das Aufbringen der Paste aus den die mit Nanopartikeln beschichteten Aktivmassepartikeln auf ein selbsttragendes Substrat sowie das Trocknen und Aushärten der Paste zum Ausbilden einer Aktivschicht der negativen Elektrode.

Das Substrat kann nach Material und Abmessung so ausgewählt sein, dass es im Betrieb der elektrochemischen Vorrichtung als Stromableiter der negativen Elektrode dient.

In den Verfahren nach dem ersten bis vierten Aspekt der Erfindung können die Nanopartikel aus einem Material hergestellt sein, das aus einer Gruppe ausgewählt ist, die Aluminiumoxid, Zirkonoxid, Siliziumoxid oder einer Mischung davon umfasst. Eine bevorzugte Ausführungsform der vorliegenden Erfindung sieht daher eine negative Elektrode vor, bei der die Nanopartikel aus einem Material bestehen, das aus einer Gruppe, die Aluminuimoxid, Zirkonoxid, Siliziumoxid oder eine Mischung davon umfasst, ausgewählt ist.

Die Erfindung wird nachfolgend anhand spezieller Ausführungsformen in größerer Einzelheit beispielhaft, jedoch nicht beschränkend, beschrieben.

In einer ersten Ausführungsform einer Lithium-lonen-Batterie umfasst eine negative Elektrode als Trägerfolie, auf der das Aktivmaterial aufgebracht wird, eine selbsttragende KupferFolie, die im Betrieb der Lithium-lonen-Zelle als Stromableiter dient. Zum Ausbilden der Aktivschicht wird eine Paste bereitet, die umfasst:
Als Aktivmaterial überwiegend "Hard Carbon" (amorphe Kohlenstoffmodifikation),
als Bindemittel PVDF (Polyvinylidenfluorid; teilkristallin) und
als Leitfähigkeitszusatz Ruß und Graphit

Die aus diesen Bestandteilen ausgebildete Paste wird auf die Trägerfolie aufgebracht, getrocknet und gehärtet.

Die so erhaltene negative Elektrode (Anode) wird mit Nanopartikeln entweder aus Aluminiumoxid (Al₂O₃) oder Zirkonoxid (ZrO₂) beschichtet. Dazu wird die negative Elektrode in eine aus den Nanopartikeln vorbereitete Suspension eingetaucht und dabei beschichtet, anschließend getrocknet und gehärtet und dadurch stabilisiert.

Zur Herstellung einer Lithium-Ionen-Zelle wird diese negative Elektrode eingebracht in ein Elektrolyt, das als Lösungsmittel Alkylcarbonate in verschiedenen Verhältnissen (Ethylencarbonat, Diethylcarbonat, Ehtylmethylcarbonat), als erstes Additiv einen Radikalfänger, als zweites Additiv einen erfindungsgemäßen SEI-Film-Stabilisator und als Leitsalz LiPF₆ enthält.

Mit nach dieser Ausführungsform hergestellten negativen Elektroden kann eine Lithium-Ionen-Zelle problemlos mehrere Tausend Zyklen von Laden und Entladen ohne größere Alterungsverluste erzielen.

In einer weiteren Ausführungsform der Erfindung wird eine Lithium-lonen-Zelle hergestellt unter Verwendung einer herkömmlichen negativen Elektrode und einem Separatorkompositmaterial nach der Erfindung, dessen Trägerschicht je nach Anwendung ein Edelstahlgewebe ist oder aus einem Polymervlies besteht. Dabei wird das Trägermaterial mit Nanopartikeln (Aluminium- bzw. Zirkonoxid) beschichtet, danach getrocknet und gehärtet und dadurch stabil. Anschließend wird als poröse funktionelle Schicht eine beständige Keramik als keramische Membran aufgebracht, die aus Aluminiumoxid (Al₂O₃) bzw. Siliziumdioxid (SiO₂) besteht.

## Patentansprüche

1. Negative Elektrode für eine elektrochemische Vorrichtung, insbesondere eine Lithium-Ionen-Batterie, mit:
einer Aktivschicht, die eine poröse äußere Oberfläche ausbildet,
**dadurch gekennzeichnet, dass** zumindest die äußere Oberfläche der Aktivschicht zumindest bereichsweise mit Nanopartikeln beschichtet ist.

2. Negative Elektrode nach Anspruch 1, **dadurch gekennzeichnet, dass** die Nanopartikel aus einem Material bestehen, das aus einer Gruppe, die Aluminuimoxid, Zirkonoxid, Siliziumoxid oder eine Mischung davon umfasst, ausgewählt ist.

3. Separatorkompositmaterial zur Separierung von Elektroden in einer elektrochemischen Vorrichtung, insbesondere einer Lithium-lonen-Batterie, mit:
einer im Wesentlichen selbsttragende Trägerschicht, und
einer zumindest einseitig auf der Trägerschicht aufgebrachten porösen funktionellen Schicht, die im Betrieb der elektrochemischen Vorrichtung insbesondere zur Aufnahme eines Elektrolyts, zur Ionenleitung und als Elektrodensperre geeignet ist,
**dadurch gekennzeichnet, dass** eine äußere Oberfläche der Trägerschicht zumindest auf einer Seite zumindest in Teilbereichen mit Nanopartikeln beschichtet ist.

4. Separatorkompositmaterial nach Anspruch 3, **dadurch gekennzeichnet, dass** die Nanopartikel aus einem Material bestehen, das aus einer Gruppe, die Aluminuimoxid, Zirkonoxid, Siliziumoxid oder eine Mischung davon umfasst, ausgewählt ist.

5. Ausgangsmaterial zum Ausbilden einer Aktivschicht einer negativen Elektrode für eine elektrochemische Vorrichtung, insbesondere eine Lithium-lonen-Batterie, wobei das Ausgangsmaterial im Wesentlichen Aktivmassepartikel umfasst,
**dadurch gekennzeichnet, dass** die Aktivmassepartikel mit Nanopartikeln beschichtet sind.

6. Ausgangsmaterial nach Anspruch 5, **dadurch gekennzeichnet, dass** die Aktivmassepartikel aus einem Material bestehen, welches ausgewählt ist aus der Gruppe, die aus Graphit, Hard Carbon, nanokristallinem amorphem Silizium oder Lithium-Tantalat besteht.

7. Paste zum Herstellen einer Aktivschicht einer negativen Elektrode für eine elektrochemische Vorrichtung, insbesondere eine Lithium-lonen-Batterie, wobei die Paste aus einem Ausgangsmaterial, das im Wesentlichen Aktivmassepartikel umfasst, gebildet ist,
**dadurch gekennzeichnet, dass** die Aktivmassepartikel mit Nanopartikeln beschichtet sind.

8. Paste nach Anspruch 7, **dadurch gekennzeichnet, dass** die Nanopartikel aus einem Material bestehen, das aus einer Gruppe, die Aluminuimoxid, Zirkonoxid, Siliziumoxid oder eine Mischung davon umfasst, ausgewählt ist.

9. Elektrochemische Vorrichtung, insbesondere eine Lithium-lonen- Batterie, mit einer negativen Elektrode nach einem der Ansprüche 1 oder 2.

10. Elektrochemische Vorrichtung, insbesondere eine Lithium-lonen- Batterie, mit einem Separatorkompositmaterial nach einem der Ansprüche 3 oder 4.

11. Verfahren zum Herstellen einer negativen Elektrode für eine elektrochemische Vorrichtung, insbesondere eine Lithium-lonen-Batterie, umfassend:
- Bereitstellen einer negativen Elektrode mit einer Aktivschicht,
**gekennzeichnet durch**
- Beschichten einer äußeren Oberfläche der Aktivschicht zumindest bereichsweise mit Nanopartikeln.

12. Verfahren zum Herstellen einer negativen Elektrode für eine elektrochemische Vorrichtung, insbesondere eine Lithium-lonen-Batterie, umfassend:
- Bereitstellen einer negativen Elektrode mit einer Aktivschicht,
**gekennzeichnet durch**
- Beschichten einer äußeren Oberfläche der Aktivschicht zumindest bereichsweise mit einer porösen funktionellen Schicht, die im Betrieb der elektrochemischen Vorrichtung insbesondere zur Aufnahme eines Elektrolyts, zur Ionenleitung und als Elektrodensperre geeignet ist, und
- Beschichten einer äußeren Oberfläche der porösen Schicht zumindest bereichsweise mit Nanopartikeln.

13. Verfahren zum Herstellen eines Separatorkompositmaterials für den Einsatz in einer elektrochemischen Vorrichtung, insbesondere einer Lithium-lonen-Batterie, umfassend:
- Beschichten einer im Wesentlichen selbsttragenden Trägerschicht zumindest bereichsweise mit Nanopartikeln,
- Aufbringen einer porösen insbesondere Schicht, die im Betrieb der elektrochemischen Vorrichtung insbesondere zur Aufnahme eines Elektrolyts, zur Ionenleitung und als Elektrodensperre geeignet ist, zumindest bereichsweise auf die mit zumindest bereichsweise mit Nanopartikeln beschichtete Trägerschicht.
